# EUROPÄISCHE PATENTSCHRIFT

(11) **EP 1 455 116 B1**
(45) Veröffentlichungstag und Bekanntmachung des Hinweises auf die Patenterteilung: **09.05.2012**
(21) Anmeldenummer: 03100580.4
(22) Anmeldetag: 07.03.2003
(51) Int. Cl.: F16H 3/093

(54) **Kurzbauendes Zahnradwechselgetriebe**
Compact gearbox
Boîte de vitesses compacte

(43) Veröffentlichungstag der Anmeldung: 08.09.2004
(73) Patentinhaber: Getrag Ford Transmissions GmbH, 50725 Köln (DE)
(72) Erfinder: Eggert, Ulrich, 41751 Viersen (DE); Hegerath, Andreas, 50126 Bergheim (DE)
(74) Vertreter: Drömer, Hans-Carsten

(56) Entgegenhaltungen:
- EP-A- 0 207 910
- WO-A1-01/84019
- FR-A5- 2 199 378
- US-A- 5 819 587
- US-A1- 2002 092 372
- PATENT ABSTRACTS OF JAPAN vol. 015, no. 190 (M-1113), 16. Mai 1991 (1991-05-16) -& JP 03 048060 A (KAWASAKI HEAVY IND LTD), 1. März 1991 (1991-03-01)

## Beschreibung

Kurzbauendes Zahnradwechselgetriebe, insbesondere für Kraftfahrzeuge gemäß dem Oberbegriff des Anspruches 1 oder 2.

Ein gattungsgemäßes Getriebe ist aus der EP 1 067 312 bekannt. Ein solches Getriebe kann sowohl als manuelle oder automatisierte Schaltversion als auch als Lastschaltgetriebe ausgeführt sein. In allen Varianten stehen die beiden Ausgangswellen mit der Abtriebswelle in getrieblicher Verbindung. In der manuellen und der automatisierten Schaltversion weist das Getriebe eine Eingangswelle auf und ist über mehrere Zahnradsätze sowohl mit der ersten als auch mit der zweiten Ausgangswelle verbunden. Zu jedem Zahnradsatz gehören ein feststehendes Zahnrad und ein schaltbares Losrad. Obwohl bei dem bekannten Konzept alle Schaltvorrichtungen zum Schalten der Losräder auf den Ausgangswellen angeordnet sind, ergibt sich doch durch die Verschachtelung der Festräder auf der Eingangswelle eine gewisse Baulänge, die länger ist als der Platzbedarf nur für die Losräder mit den Schaltvorrichtungen. Dies trifft auch zu für die Lastschaltversion, die zwei koaxial angeordnete Eingangswellen aufweist, die ebenfalls über mehrere Zahnradsätze mit beiden Ausgangswellen in Verbindung stehen.

In der US 6 427 550 ist ein Doppelkupplungsgetriebe beschrieben, das eine Eingangswelle und eine Zwischenwelle aufweist, wobei die Zwischenwelle über einen Kettenantrieb mit einer koaxial zur Eingangswelle angeordneten Transferwelle verbunden ist. Eingangswelle und Zwischenwelle sind über verschiedene Radsätze mit einer Ausgangswelle verbunden, die wiederum mit einer Abtriebswelle in Verbindung steht. Hier ergibt sich zwar nicht das Problem der Schachtelung der verschiedenen Zahnradsätze, da Losräder auf Zwischenwelle und Eingangswelle auf die gleichen Festräder der Ausgangswelle zugreifen, jedoch ist es aus dem Stand der Technik bekannt, daß bei solchen mehrfachen Abhängigkeiten zwischen Zahnradsätzen eine optimale Getriebeabstufung nur sehr schwer erreichbar ist.

In der JP 03048060 A ist ein Schaltgetriebe mit einer Eingangswelle offenbart, die über zwei schaltbare Zahnradsätze mit einer ersten Ausgangswelle und mit einer Zwischenwelle verbunden werden kann. Die Zwischenwelle wiederum kann in Eingriff mit einer zweiten Ausgangswelle gebracht werden. Soweit eine koaxial zur ersten Ausgangswelle angeordnete erste Kupplung geschlossen ist, lässt sich Drehmoment von der Eingangswelle über die schaltbaren Zahnradsätze und dann über die Ausgangswelle auf die Abtriebswelle übertragen. Ein Drehmomentfluss zwischen Eingangswelle und Abtriebwelle über die zweite Ausgangswelle ergibt sich, wenn eine koaxial zur Zwischenwelle angeordnete zweite Kupplung geschlossen wird. Aufgrund der Zwischenwelle sorgt das Schaltgetriebe bei Drehmomentfluss über die zweite Ausgangswelle für eine Drehrichtung der Abtriebswelle, die entgegengesetzt zu der Drehrichtung ist, wenn der Drehmomentfluss über die erste Ausgangswelle erfolgt. Somit lässt sich das Schaltgetriebe in zwei Teilgetriebe aufteilen, die für unterschiedliche Drehrichtungen der Abtriebswelle sorgen. Die zwei schaltbaren Zahnradsätze der JP 03048060 A weisen jeweils ein Losrad auf, das mit einem Festrad auf der Zwischenwelle und gleichzeitig mit einem Festrad auf der ersten Ausgangswelle kämmt, wodurch eine doppelte Abhängigkeit zwischen den zwei Teilgetrieben entsteht.

Die WO01/84019 offenbart ein Doppelkupplungsgetriebe mit einer Zwischenwelle, die mit einer Eingangswelle mittels Zahnrädern auf diesen beiden Wellen in Verbindung steht. Die Zwischenwelle und die damit einhergehende Richtungsumkehr ermöglicht einen Drehmomentfluss für einen Rückwärtsgang des Getriebes.

Aufgabe der Erfindung ist es deshalb, ein Zahnradwechselgetriebe so weiterzubilden, daß ein einfacher Aufbau und eine besonders kompakte Bauform in Längsrichtung erreicht werden. Eine weitere Aufgabe der Erfindung ist die Möglichkeit, das gleiche Getriebegrundkonzept für verschiedene Varianten wie manuelles Schaltgetriebe, automatisiertes Schaltgetriebe und Lastschaltgetriebe zu verwenden.

Gelöst wird diese Aufgabe mit den Merkmalen des Patentanspruches 1 oder 2.

Das erfinderische Konzept sieht vor, daß ein erstes Teilgetriebe gebildet wird, indem eine Eingangswelle mit der ersten Ausgangswelle durch mindestens einen Zahnradsatz verbindbar ist, und ein zweites Teilgetriebe gebildet wird, indem eine Zwischenwelle mit der zweiten Ausgangswelle durch mindestens einen weiteren Zahnradsatz verbindbar ist, wobei die Zwischenwelle mit einer Eingangswelle getrieblich in Verbindung steht. Aufgrund dieser Anordnung bilden die zwei Teilgetriebe zwei unabhängige Getriebe, die beide für sich so kurz wie möglich ausgeführt sein können. Weder muß auf die Schachtelung aufgrund einer benachbarten Ausgangswelle noch auf Abhängigkeiten der Zahnräder, weil verschiedene Losräder auf das gleiche Festrad zugreifen, Rücksicht genommen werden. Durch das Zwischenzahnrad ergibt sich zwischen den beiden Teilgetrieben ein großer - relativ zu den Wellen gesehen - radialer Versatz ergeben, der das zweite Teilgetriebe unabhängig vom ersten macht.

Dabei sind Eingangswelle bzw. Zwischenwelle mit erster bzw. zweiter Ausgangswelle durch mindestens einen Zahnradsatz verbindbar. Bei einem Kraftfahrzeuggetriebe werden auf jeden Fall mehrere Zahnradsätze benötigt, je nach dem wie viele Gänge insgesamt das Getriebe aufweist. Durch die völlige Unabhängigkeit der beiden Teilgetriebe ist es unerheblich, welche Zahnradsätze für welche Gänge auf welchen Wellen angeordnet sind. Es ist jede denkbare Kombination von Zahnradsätzen in den Teilgetrieben möglich.

Die getriebliche Verbindung von Zwischenwelle und Eingangswelle Übertragsmittel erfolgt durch Zahnräder auf den beiden Wellen mit einem Zwischenzahnrad.

Eine besonders platzersparende Anordnung ergibt sich, wenn die für die Verbindung zwischen Ausgangswellen und Abtriebswellen auf jeder Ausgangswelle angeordneten Abtriebsritzel in der Ebene des Zwischenzahnrades angeordnet sind. Dann wird der axiale Bauraum, der ohnehin für die Abtriebsritzel vorzusehen ist, gleichzeitig für das Zwischenzahnrad genutzt, so daß insgesamt durch das zusätzliche Zwischenzahnrad kein zusätzlicher axialer Bauraum benötigt wird.

In einer weiteren bevorzugten Ausführung weist das zweite Teilgetriebe - in Richtung der Zwischenwelle gesehen - sowohl vor als auch hinter einem mit dem Zwischenzahnrad kämmenden Zahnrad Zahnradsätze auf. Da durch den axialen Versatz der Zwischenwelle zur Eingangswelle die Zwischenwelle sich auch axial in Richtung einer Kupplung erstrecken kann, wird durch diese Maßnahme auch der Bauraum in Höhe der Kupplung platzsparend ausgenutzt.

Bevorzugt ist die Anzahl der Zahnradsätze des zweiten Teilgetriebes mindestens so groß wie die Anzahl der Zahnradsätze des ersten Teilgetriebes. Da der axiale Bauraum, der für die Zwischenwelle zur Verfügung steht, durch die im vorherigen Absatz beschriebene Maßnahme größer ist als der für die Eingangswelle, ist es sinnvoll, im zweiten Teilgetriebe zumindest gleichviel, besser aber mehr Zahnradsätze als im ersten Teilgetriebe anzuordnen. Die maximale axiale Erstreckung des gesamten Getriebes bestimmt sich ja im wesentlichen durch die Länge der Eingangswelle, d.h. durch die Anzahl der Zahnradsätze des ersten Teilgetriebes.

Erfindungsgemäß ist eine Antriebswelle mittels einer Kupplung mit einer der Eingangswellen verbindbar, wobei diese Eingangswelle mit der ersten Ausgangswelle verbindbar und mit der Zwischenwelle über das Zwischenradzahnrad verbunden ist. Eine solche Konfiguration entspricht einem manuellen oder einem automatisierten Getriebe. Derartige Getriebe weisen nur eine Eingangswelle auf, die über eine Kupplung mit einer Antriebswelle einer Antriebsmaschine, vorzugsweise einer Verbrennungskraftmaschine, verbindbar ist. Die Eingangswelle ist mit der ersten Ausgangswelle mittels der darauf angeordneten Zahnradsätze über geeignete Schaltvorrichtungen verbindbar, z.B. Synchronkupplungen an den Losrädern der Zahnradsätze. Die Eingangswelle ist ständig mit der Zwischenwelle über das Zwischenzahnrad verbunden, während die Zwischenwelle wieder über die Zahnradsätze mit der zweiten Ausgangswelle verbindbar ist. Durch die Aufteilung eines Getriebes auf die beiden Teilgetriebe kann das Getriebe sehr kurz gebaut werden, wobei die Übersetzungsverhältnisse aller Zahnradsätze beliebig gewählt werden können. Damit ist eine sehr gute Anpassung an jede geforderte Übersetzungscharakteristik möglich.

Bevorzugt sind im ersten als auch im zweiten Teilgetriebe Zahnradsätze benachbart angeordnet, bei denen Losräder durch eine gemeinsame Synchronisiereinheit geschaltet werden, wobei die Zahnradsätze jeweils aufeinander folgenden Vorwärtsgängen entsprechen. Eine solche Anordnung wird besonders in einem manuellen Schaltgetriebe angewendet, wenn z.B. eine gemeinsame Synchronisiervorrichtung vorgesehen ist, die den ersten und zweiten Gang schaltet. Dies gilt auch für die Kombination von drittem und viertem Gang bzw. von fünftem und sechstem Gang. Diese Anordnung läßt sich ohne großen mechanischen Aufwand mit der manuellen Schaltbetätigungsvorrichtung koppeln, bei der jeweils erster und zweiter Gang, dritter und vierter Gang, usw. in einer Schaltgasse angeordnet sind.

Eine besonders bevorzugte Aufteilung ergibt sich bei einem 6-Gang-Schaltgetriebe, wenn auf dem ersten Teilgetriebe Zahnradsätze für den fünften und sechsten Gang und auf dem zweiten Teilgetriebe Zahnradsätze für den ersten bis vierten Gang angeordnet sind. Das erste Teilgetriebe kann dann sehr kurz bauen, da nur der fünfte und sechste Gang, eventuell ergänzt um den Rückwärtsgang, unterzubringen sind. Dabei ist es unerheblich, ob die Schalt- bzw. Synchronisiervorrichtungen für die Losräder auf der Eingangswelle oder auf der ersten Ausgangswelle angeordnet sind. Dies kann beliebig nach den Erfordernissen im Hinblick auf Platzbedarf, Geräuschverhalten, Schaltcharakteristik und Trägheitsmomenten der Anordnung gewählt werden.

Dies gilt auch für das zweite Teilgetriebe, bei dem die Zahnradsätze für den ersten bis vierten Gang beliebig auf der Zwischenwelle und der zweiten Ausgangswelle kombiniert werden können. Dabei ist es unerheblich, ob der erste und zweite Gang durch eine gemeinsame Schaltvorrichtung geschaltet werden oder der erste und dritte, oder ob die Schaltvorrichtungen auf der Zwischenwelle oder der zweiten Ausgangswelle, oder ob Zahnradsätze teilweise vor oder hinter dem Zahnrad, das mit dem Zwischenzahnrad kämmt, angeordnet sind.

Bevorzugt ist ein Zahnradsatz für den Rückwärtsgang im ersten Teilgetriebe angeordnet, in dem ein Festrad und ein Großrad mittels eines Zwischenrades verbunden sind, wobei das Zwischenrad mittels einer Achse gelagert ist. Durch diese Maßnahme kann der Rückwärtsgang beliebig bei geringem Platzbedarf positioniert werden.

In der bevorzugten Ausführung ist das Zwischenzahnrad auf der der Kupplung zugewandten Seite der Eingangswelle angeordnet. Damit wird eine direkte Kraftübertragung von Kupplung zur Eingangswelle auf das Zwischenzahnrad erreicht, ohne daß das Drehmoment für die Zwischenwelle über die gesamte Eingangswelle geleitet werden muß. Bevorzugt wird diese Anordnung kombiniert mit dem Merkmal, daß die Abtriebsritzel der Ausgangswellen mit dem Zwischenzahnrad in einer Ebene liegen.

In einer weiteren erfindungsgemäßen Ausführungsform ist eine Antriebswelle mittels einer ersten Kupplung mit einer ersten Eingangswelle verbindbar, wobei diese erste Eingangswelle mit der ersten Ausgangswelle verbindbar ist, und die Antriebswelle mittels einer zweiten Kupplung mit einer zweiten Eingangswelle, welche koaxial zur ersten Eingangswelle angeordnet ist, verbindbar ist, wobei diese zweite Eingangswelle mit der Zwischenwelle über das Zwischenzahnrad verbunden ist. Mit einem derartigen Doppelkupplungsgetriebe läßt sich bevorzugt ein Lastschaltgetriebe realisieren, welches von der Funktionsweise aus dem Stand der Technik hinlänglich bekannt ist.

Durch diese Anordnung ist das erste Teilgetriebe nur mittels einer ersten Kupplung mit Last beaufschlagbar, so daß hier eine optimale Abstimmung sowohl auf das Steuerverhalten als auch auf das Übersetzungsverhältnis möglich ist. Das gleiche gilt für das zweite Teilgetriebe, das durch die Verbindung über die zweite Kupplung mit der Antriebswelle ebenfalls ein völlig eigenständiges Getriebe darstellt.

Vorteilhaft umfaßt das erste Teilgetriebe keine Zahnradsätze für geradzahlige Vorwärtsgänge und das zweite Teilgetriebe keine Zahnradsätze für ungeradzahlige Vorwärtsgänge, oder auch umgekehrt. Eine solche Anordnung entspricht den Anforderungen an ein Lastschaltgetriebe, bei dem keine benachbarten Gänge durch die gleiche Kupplung geschaltet werden sollen. Durch diese Anordnung wird erreicht, daß bei einer sequenziellen Herunter- bzw. Heraufschaltung immer abwechselnd ein Teilgetriebe mit einer Kupplung verbindbar ist.

Als günstig erweist sich dabei, wenn auf dem ersten Teilgetriebe Zahnradsätze für den zweiten, vierten und sechsten Gang und auf dem zweiten Teilgetriebe Zahnradsätze für den ersten, dritten und fünften Gang angeordnet sind, sofern ein 6-Gang-Getriebe vorliegt. Der Zahnradsatz für den Rückwärtsgang wird dann ebenfalls im zweiten Teilgetriebe angeordnet, da dort insgesamt mehr axialer Bauraum vorhanden ist. Bei der Anordnung von erstem und Rückwärtsgang auf einer Schaltvorrichtung kann auf einfache Weise das sicherheitsrelevante Erfordernis erfüllt werden, das nicht von einem Vorwärtsgang direkt in den Rückwärtsgang geschaltet wird, da hier beim Übergang vom ersten Gang zum Rückwärtsgang auf jeden Fall die gleiche Kupplung betätigt werden muß.

Die Anordnung von Rückwärtsgang zusammen mit einem Vorwärtsgang auf der gleichen Schaltvorrichtung ist natürlich auch umgekehrt möglich, d.h. der Rückwärtsgang liegt auf dem gleichen Teilgetriebe mit den geradzahligen Vorwärtsgängen. Bei einer solchen Anordnung läßt sich vorteilhaft zwischen ersten Gang und Rückwärtsgang hin- und herschalten nur durch abwechselnde Betätigung der beiden Kupplungen, was z.B. beim Anfahren von festgefahrenen Fahrzeugen sinnvoll eingesetzt werden kann.

Als weiteres Merkmal ist eine mit der Antriebswelle verbundene Pumpenwelle koaxial innerhalb einer als Hohlwelle ausgebildeten Eingangswelle angeordnet. Bei der Verwendung z.B. als automatisiertes Schaltgetriebe oder als Lastschaltgetriebe kann es erforderlich sein, daß das Getriebe über eine eigene Versorgung mit Drucköl verfügt. Indem eine Eingangswelle als Hohlwelle ausgeführt ist, kann eine Pumpenwelle darin geführt werden und mit der Antriebswelle fest verbunden sein, so daß auf einfache Weise ein ständiger Antrieb für die Ölversorgung im Getriebe zur Verfügung steht.

Die Verwendung eines solchen Getriebes kann sowohl bei Längseinbau als auch bei Quereinbau in einem Kraftfahrzeug erfolgen. Die Anpassung an die Anforderung im Kraftfahrzeug erfolgt dann über die konstruktive Gestaltung der Abtriebswelle. Das heißt, in die Abtriebswelle kann ein zusätzliches Differentialgetriebe integriert sein, was direkt einen Anschluß von Achsantriebswellen ermöglicht.

Weitere vorteilhafte Ausgestaltungen der Erfindungen sind den Zeichnungen und den dazugehörigen Beschreibungen zu entnehmen. Es zeigen:
- Fig. 1: eine schematische Ansicht des erfindungsgemäßen Getriebes;
- Fig. 2: eine schematische Seitenansicht des Getriebes;
- Fig. 3: die schematische Ansicht eines manuellen 6-Gang-Schaltgetriebes; und
- Fig. 4: die schematische Ansicht eines 6-Gang-Lastschaltgetriebes.

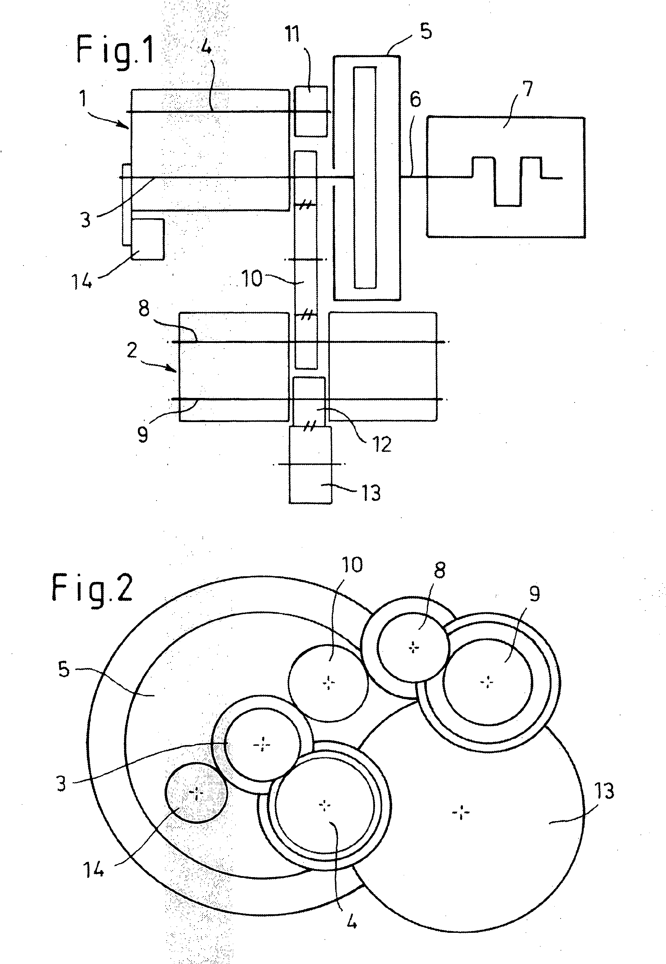

Die schematische Darstellung des erfindungsgemäßen Getriebes in Fig. 1 zeigt die prinzipielle Anordnung von erstem Teilgetriebe 1 und zweitem Teilgetriebe 2. Das erste Teilgetriebe 1 weist die Eingangswelle 3 und die Ausgangswelle 4 auf. Über die Kupplung 5 ist die Eingangswelle 3 mit der Antriebswelle 6 eines Verbrennungsmotors 7 verbindbar.

Das zweite Teilgetriebe 2 weist die Zwischenwelle 8 und die Ausgangswelle 9 auf, wobei die Zwischenwelle 8 mit der Eingangswelle 3 über das Zwischenzahnrad 10 verbunden ist. Erste und zweite Ausgangswelle 4 und 9 weisen jeweils ein Ritzel 11 und 12 auf, die in direkter Verbindung mit der Abtriebswelle 13 stehen.

Am ersten Teilgetriebe ist eine Ölpumpe 14 befestigt, die über eine nicht dargestellte Pumpenwelle angetrieben ist. Diese Pumpenwelle ist koaxial zur Eingangswelle 3 angeordnet und drehfest mit der Antriebswelle 6 verbunden.

In der schematischen Darstellung ist das zweite Teilgetriebe 2 sowohl vor als auch hinter der Ebene des Zwischenzahnrades 10 angeordnet. Es versteht sich von selbst, daß dies keine zwingende Notwendigkeit ist, vielmehr kann die Lage des zweiten Teilgetriebes relativ zum Zwischenzahnrad 10 beliebig gewählt werden, je nach konstruktiven, baulichen und anderen funktionellen Erfordernissen.

Fig. 2 zeigt die schematische Seitenansicht des erfindungsgemäßen Getriebes.

Kupplung 5 und Eingangswelle 3 liegen auf einer Achse. Die Eingangswelle ist über verschiedene Zahnradsätze mit der Ausgangswelle 4 verbindbar, und sie ist in ständiger Verbindung mit der Zwischenwelle 8 über das Zwischenzahnrad 10. Die Zwischenwelle 8 ist über verschiedene Zahnradsätze mit der zweiten Ausgangswelle 9 verbindbar, wobei die zweite Ausgangswelle 9 und die erste Ausgangswelle 4 beide in ständigem Eingriff mit der Abtriebswelle 13 sind. Die Ölpumpe 14 ist mit einem geeigneten getrieblichen Verbindungsmittel direkt mit dem Antrieb verbunden.

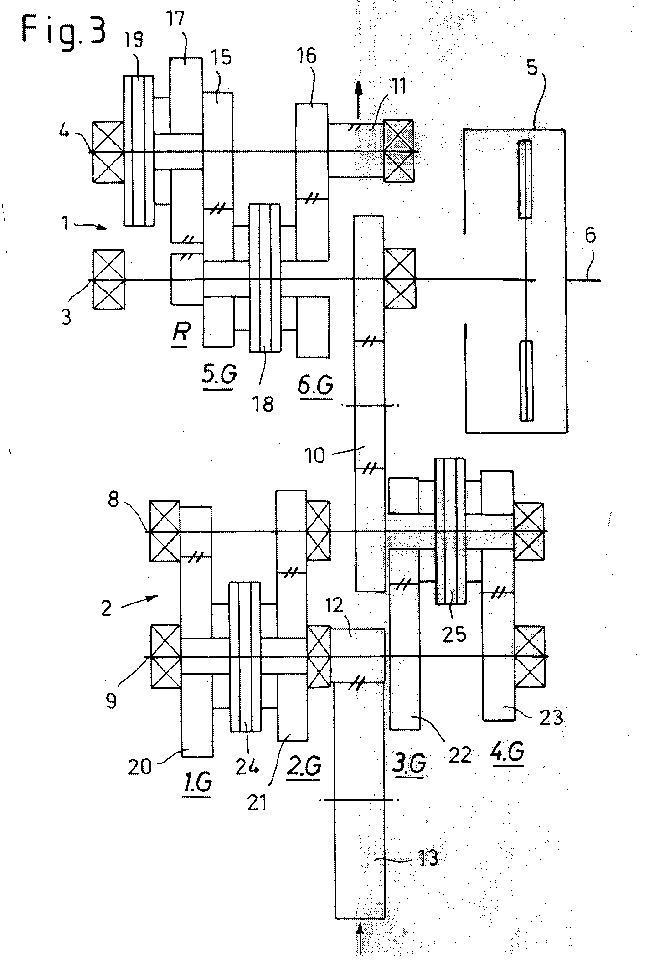

Ein manuell schaltbares 6-Gang-Getriebe zeigt Fig. 3. Im ersten Teilgetriebe 1 sind die Radsätze für den fünften Gang 15 und den sechsten Gang 16 sowie den Rückwärtsgang 17 angeordnet. Fünfter und sechster Gang weisen die gemeinsame Synchronisiereinrichtung 18 auf, die auf der Eingangswelle 3 angeordnet ist. Mittels der Synchronisiereinrichtung 18 können wahlweise das Losrad des Radsatzes 15 für den fünften Gang oder des Radsatzes 16 für den sechsten Gang drehfest mit der Eingangswelle verbunden werden. Die Synchronisiervorrichtung 19 für den Rückwärtsgang ist auf der ersten Ausgangswelle 4 angeordnet. Für den Rückwärtsgang wird ein weiteres Zwischenrad, hier nicht dargestellt, das mit dem Festrad auf der Eingangswelle 3 und dem Losrad auf der Ausgangswelle 4 des Zahnradsatzes 17 kämmt, benötigt. Das fest mit der ersten Ausgangswelle 4 verbundene Abtriebsritzel 11 kämmt direkt mit einem Zahnrad auf der Abtriebswelle 13.

Das zweite Teilgetriebe 2 weist die Zahnradsätze 20 bis 23 für die Gänge eins bis vier auf. Die Schaltvorrichtung 24 zur Schaltung der Gänge eins und zwei ist auf der Ausgangswelle 9 angeordnet, d.h., die Losräder der Zahnradsätze 20 und 21 befinden sich auf der Ausgangswelle 9, während die dazugehörigen Festräder auf der Zwischenwelle 8 befestigt sind. Die Synchronisiereinrichtung 25 zur Schaltung des dritten und vierten Ganges ist auf der Zwischenwelle 8 angeordnet, d.h., hier sind die Losräder des dritten und vierten Ganges auf der Zwischenwelle 8 und die Festräder auf der Ausgangswelle 9 angeordnet.

Weiterhin ist ersichtlich, wie die Zahnradpaare für den ersten und zweiten Gang 20 und 21 bzw. für dritten und vierten Gang 22 und 23 einmal hinter und einmal vor dem mit dem Zwischenzahnrad 10 kämmenden auf der Zwischenwelle 8 angeordneten Zahnrad auf den Wellen positioniert sind. Diese Aufteilung ermöglicht die axiale Verschiebung des zweiten Teilgetriebes 2 in Richtung auf die Kupplung 5 bzw. den nicht dargestellten Antriebsmotor. Damit ist die axiale Erstreckung des zweiten Teilgetriebes in der entgegengesetzten Richtung zur Kupplung 5 gering, maßgebend sind die beiden Radsätze für den ersten und zweiten Gang 20 und 21. Die Baulänge des gesamten Getriebes ergibt sich damit im wesentlichen aus der axialen Erstreckung des ersten Teilgetriebes (1).

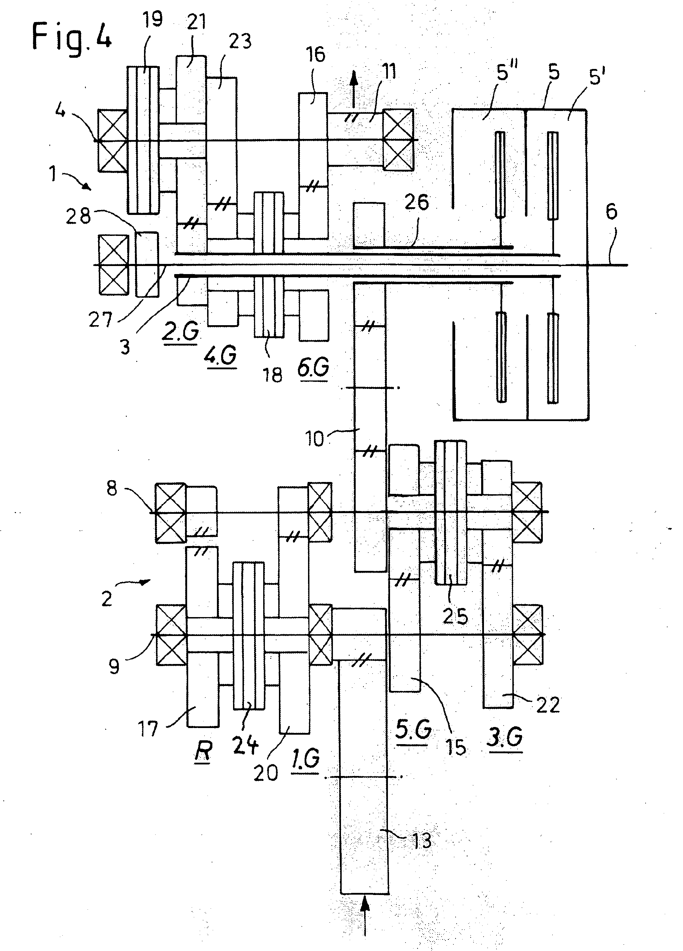

In Fig. 4 ist für das erfindungsgemäße Getriebe die Lastschaltvariante gezeigt. Der prinzipielle Aufbau ist der Gleiche wie für das manuelle Getriebe in Fig. 3. Der wesentliche Unterschied besteht in der zusätzlichen Eingangswelle 26, die als Hohlwelle ausgeführt ist und die koaxial zur ersten Eingangswelle 3 angeordnet ist. Die Kupplung 5 ist hier als Doppelkupplung ausgeführt, so daß die erste Eingangswelle 3 mittels der Kupplung 5' und die zweite Eingangswelle 26 mittels der Kupplung 5" jeweils separat mit der Antriebswelle 6 verbunden werden können. Weiterhin weist die zweite Eingangswelle 26 ein Zahnrad auf, das mit dem Zwischenrad 10 kämmt, wodurch die zweite Eingangswelle 26 nur mit dem zweiten Teilgetriebe 2 in Verbindung steht. Die erste Eingangswelle 3 dagegen steht nur mit dem ersten Teilgetriebe 1 in Verbindung.

Unterschiedlich ist bei der Lastschaltversion auch die Anordnung der Zahnradsätze. Dargestellt ist eine Ausführung unter Beibehaltung der Synchronisiereinrichtungen (18, 19, 24, 25) wie in Fig. 3, mit nur geradzahligen Zahnradsätzen für den zweiten, vierten und sechsten Gang 21, 23 und 16 im ersten Teilgetriebe (1), und mit ungeradzahligen Zahnradsätzen für den ersten, fünften und dritten Gang 20, 22 und 15 sowie dem Rückwärtsgang 17 im zweiten Teilgetriebe 2.

In der hohlen ersten Eingangswelle 3 ist die Pumpenwelle 27 angeordnet, die fest mit der Antriebswelle 6 verbunden ist, und die ein Abtriebszahnrad 28 aufweist, worüber die nicht dargestellte Ölpumpe angetrieben wird.

Sowohl aus Fig. 3 als auch aus Fig. 4 ist ersichtlich, daß das erfindungsgemäße Getriebe nicht auf die hier dargestellten Ausführungsbeispiele beschränkt ist. Vielmehr ist jede denkbare Kombination von Zahnradsatzanordnungen möglich, sowohl bezüglich der Anordnung in den Teilgetrieben 1 und 2 als auch bezüglich ihrer Lage auf den Teilgetrieben und bezüglich der Anordnung der Synchronisiereinrichtungen entweder auf Eingangswellen oder Ausgangswellen oder Zwischenwellen. Des Weiteren ist das Getriebe nicht auf eine bestimmte Gangzahl begrenzt, sondern es ist jede mögliche Anzahl von Vorwärtsgängen und Rückwärtsgängen möglich. Auch gilt bezüglich der hier erwähnten Merkmale, daß ein erfindungsgemäßes Getriebe jedes der hier gezeigten Merkmale in jeder beliebigen, technisch ausführbaren Kombination aufweisen kann.

## Patentansprüche

1. Kurzbauendes Zahnradwechselgetriebe, insbesondere für Kraftfahrzeuge, mit einer einzigen Eingangswelle (3) und zwei Ausgangswellen (4, 9), die beide mit einer Abtriebswelle (13) in Verbindung stehen,
wobei ein erstes Teilgetriebe (1) gebildet wird, indem die Eingangswelle (3) mit der ersten Ausgangswelle (4) durch mindestens einen Zahnradsatz (16) verbindbar ist, und eine Antriebswelle (6) mittels einer Kupplung (5) mit der Eingangswelle (3) verbindbar ist **dadurch gekennzeichnet daß** ein zweites Teilgetriebe (4) gebildet wird, indem eine Zwischenwelle (8) mit der zweiten Ausgangswelle (9) durch mindestens einen weiteren Zahnradsatz (20, 22) verbindbar ist, wobei die Zwischenwelle (8) mit der Eingangswelle (3) derart getrieblich in Verbindung (10) steht, dass eine Drehbewegung von der Eingangswelle (3) und der Zwischenwelle (8) ständig zwischen der Eingangswelle (3) und der Zwischenwelle (8) übertragen wird, und die getriebliche Verbindung von der Zwischenwelle (8) mit der Eingangswelle (3) mittels Zahnrädern auf den beiden Wellen und einem Zwischenzahnrad (10) erfolgt.

2. Kurzbauendes Zahnradwechselgetriebe, insbesondere für Kraftfahrzeuge, mit einer ersten Eingangswelle (3) und einer zweiten Eingangswelle (26), welche koaxial zur ersten Eingangswelle (3) angeordnet ist, und zwei Ausgangswellen (4, 9), die beide mit einer Abtriebswelle (13) in Verbindung stehen,
wobei ein erstes Teilgetriebe (1) gebildet wird, indem die erste Eingangswelle (3) mit der ersten Ausgangswelle (4) durch mindestens einen Zahnradsatz (16) verbindbar ist, und eine Antriebswelle (6) mittels einer ersten Kupplung (5') mit der ersten Eingangswelle (3) und mittels einer zweiten Kupplung (5") mit der zweiten Eingangswelle (26) verbindbar ist **dadurch gekennzeichnet daß** ein zweites Teilgetriebe (4) gebildet wird, indem eine Zwischenwelle (8) mit der zweiten Ausgangswelle (9) durch mindestens einen weiteren Zahnradsatz (20, 22) verbindbar ist, wobei die Zwischenwelle (8) mit der zweiten Eingangswellen (26) derart getrieblich in Verbindung (10) steht, dass eine Drehbewegung von der zweiten Eingangswelle (26) und der Zwischenwelle (8) ständig zwischen der zweiten Eingangswelle (26) und der Zwischenwelle (8) übertragen wird und die getriebliche Verbindung von der Zwischenwelle (8) mit der zweiten Eingangswelle (26) mittels Zahnrädern auf beiden Wellen und einem Zwischenzahnrad (10) erfolgt.

3. Zahnradwechselgetriebe nach Anspruch 1 oder 2,
**dadurch gekennzeichnet, daß**
für die Verbindung zwischen Ausgangswellen (4, 9) und Abtriebswelle (13) jeweils ein Abtriebsritzel (11, 12) auf jeder Ausgangswelle (4, 9) angeordnet ist, wobei die Abtriebsritzel (11, 12) in der Ebene der getrieblichen Verbindung (10) angeordnet sind.

4. Zahnradwechselgetriebe nach einem der Anspruch 1 bis 3,
**dadurch gekennzeichnet, daß**
das zweite Teilgetriebe (2) - in Richtung der Zwischenwelle (8) gesehen - sowohl vor als auch hinter der getrieblichen Verbindung (10) Zahnradsätze (20, 21, 22, 23, 15) aufweist.

5. Zahnradwechselgetriebe nach einem der Ansprüche 1 bis 4,
**dadurch gekennzeichnet, daß**
die Anzahl der Zahnradsätze des zweiten Teilgetriebes (2) mindestens so groß ist wie die Anzahl der Zahnradsätze des ersten Teilgetriebes (1).

6. Zahnradwechselgetriebe nach einem der Ansprüche 1, 3 bis 5,
**dadurch gekennzeichnet, daß**
im ersten als auch im zweiten Teilgetriebe (1, 2) Zahnradsätze (15-16, 20-21, 22-23) benachbart angeordnet sind, bei denen Losräder durch eine gemeinsame Synchronisiereinheit (18, 24, 45) geschaltet werden, wobei die Zahnradsätze jeweils aufeinanderfolgenden Vorwärtsgängen entsprechen.

7. Zahnradwechselgetriebe nach einem der Ansprüche 1, 3 bis 6,
**dadurch gekennzeichnet, daß**
auf dem ersten Teilgetriebe (1) Zahnradsätze (15, 16) für den fünften und sechsten Gang, und auf dem zweiten Teilgetriebe Zahnradsätze (20, 21, 22, 23) für den ersten bis vierten Gang angeordnet sind.

8. Zahnradwechselgetriebe nach Anspruch 7,
**dadurch gekennzeichnet, daß**
ein Zahnradsatz (19) für den Rückwärtsgang im ersten Teilgetriebe (1) angeordnet ist, indem ein Festrad und ein Losrad mittels eines Zwischenrades verbunden sind, wobei das Zwischenrad mittels einer Achse gelagert ist.

9. Zahnradwechselgetriebe nach einem der Ansprüche 5 bis 8,
**dadurch gekennzeichnet, daß**
die getriebliche Verbindung auf dem der Kupplung entgegengesetzten Ende der Eingangswelle angeordnet ist.

10. Zahnradwechselgetriebe nach Anspruch 2,
**dadurch gekennzeichnet, daß**
das erste Teilgetriebe keine Zahnradsätze für geradzahlige Vorwärtsgänge und das zweite Teilgetriebe keine Zahnradsätze für ungeradzahlige Vorwärtsgänge umfaßt.

11. Zahnradwechselgetriebe nach Anspruch 2,
**dadurch gekennzeichnet, daß**
das erste Teilgetriebe (1) keine Zahnradsätze (15, 20, 22) für ungeradzahlige Vorwärtsgänge und das zweite Teilgetriebe (2) keine Zahnradsätze (16, 21, 23) für geradzahlige Vorwärtsgänge umfaßt.

12. Zahnradwechselgetriebe nach Anspruch 11,
**dadurch gekennzeichnet, daß**
auf dem ersten Teilgetriebe Zahnradsätze (16, 21, 23) für den zweiten, vierten und sechsten Gang, und auf dem zweiten Teilgetriebe Zahnradsätze (15, 20, 22) für den ersten, dritten und fünften Gang angeordnet sind.

13. Zahnradwechselgetriebe nach Anspruch 10, 11 oder 12,
**dadurch gekennzeichnet, daß**
ein Zahnradsatz (17) für den Rückwärtsgang im zweiten Teilgetriebe (2) angeordnet ist, indem ein Festrad und ein Losrad mittels eines Zwischenrades verbunden sind, wobei das Zwischenrad mittels einer Achse gelagert ist.

14. Zahnradwechselgetriebe nach einem der vorherigen Ansprüche,
**dadurch gekennzeichnet, daß**
eine mit der Antriebswelle (6) fest verbundene Pumpenwelle (27) koaxial innerhalb einer als Hohlwelle ausgebildeten Eingangswelle (3) angeordnet ist.

15. Verwendung des Zahnradwechselgetriebes nach einem der Ansprüche 6 bis 9 als manuelles Schaltgetriebe in einem Kraftfahrzeuge.

16. Verwendung des Zahnradwechselgetriebes nach einem der Ansprüche 6 bis 9 als automatisiertes Schaltgetriebe in einem Kraftfahrzeuge.

17. Verwendung des Zahnradwechselgetriebes nach einem der Ansprüche 1, 11 bis 13 als Lastschaltgetriebe in einem Kraftfahrzeuge.

18. Verwendung des Zahnradwechselgetriebes nach einem der Ansprüche 1 bis 14 als längseingebautes Getriebe in einem Kraftfahrzeuge.

19. Verwendung des Zahnradwechselgetriebes nach einem der Ansprüche 1 bis 14 als quereingebautes Getriebe in einem Kraftfahrzeuge.

## Claims

1. Compact variable-speed gearwheel transmission, in particular for motor vehicles, having a single input shaft (3) and having two output shafts (4, 9) which are both connected to a drive output shaft (13),
wherein a first component transmission (1) is formed by virtue of the input shaft (3) being connectable to the first output shaft (4) by means of at least one gearwheel set (16), and a drive input shaft (6) is connectable to the input shaft (3) via a clutch (5), **characterized in that** a second component transmission (2) is formed by virtue of an intermediate shaft (8) being connectable to the second output shaft (9) by means of at least one further gearwheel set (20, 22), wherein the intermediate shaft (8) is in geared connection (10) with the input shaft (3) such that a rotational movement of the input shaft (3) and of the intermediate shaft (8) is transmitted continuously between the input shaft (3) and the intermediate shaft (8), and the geared connection of the intermediate shaft (8) to the input shaft (3) is realized by means of gearwheels on the two shafts and an intermediate gearwheel (10) .

2. Compact variable-speed gearwheel transmission, in particular for motor vehicles, having a first input shaft (3) and having a second input shaft (26) which is arranged coaxially with respect to the first input shaft (3), and having two output shafts (4, 9) which are both connected to a drive output shaft (13),
wherein a first component transmission (1) is formed by virtue of the first input shaft (3) being connectable to the first output shaft (4) by means of at least one gearwheel set (16), and a drive input shaft (6) is connectable to the first input shaft (3) via a first clutch (5') and to the second input shaft (26) via a second clutch (5''), **characterized in that** a second component transmission (2) is formed by virtue of an intermediate shaft (8) being connectable to the second output shaft (9) by means of at least one further gearwheel set (20, 22), wherein the intermediate shaft (8) is in geared connection (10) with the second input shaft (26) such that a rotational movement of the second input shaft (26) and of the intermediate shaft (8) is transmitted continuously between the second input shaft (26) and the intermediate shaft (8), and the geared connection of the intermediate shaft (8) to the second input shaft (26) is realized by means of gearwheels on the two shafts and an intermediate gearwheel (10).

3. Variable-speed gearwheel transmission according to Claim 1 or 2,
**characterized in that**,
for the connection between the output shafts (4, 9) and the drive output shaft (13), in each case one drive output pinion (11, 12) is arranged on each output shaft (4, 9), wherein the drive output pinions (11, 12) are arranged in the plane of the geared connection (10).

4. Variable-speed gearwheel transmission according to one of Claims 1 to 3,
**characterized in that**
the second component transmission (2) has gearwheel sets (20, 21, 22, 23, 15) both in front of and behind the geared connection (10) as viewed in the direction of the intermediate shaft (8).

5. Variable-speed gearwheel transmission according to one of Claims 1 to 4,
**characterized in that** the number of gearwheel sets of the second component transmission (2) is at least as great as the number of gearwheel sets of the first component transmission (1).

6. Variable-speed gearwheel transmission according to one of Claims 1, 3 to 5,
**characterized in that**,
in the first and in the second component transmission (1, 2), there are arranged adjacent to one another gearwheel sets (15-16, 20-21, 22-23) in which loose wheels are shifted by a common synchronizing unit (18, 24, 45), wherein the gearwheel sets correspond in each case to successive forward gears.

7. Variable-speed gearwheel transmission according to one of Claims 1, 3 to 6,
**characterized in that**
gearwheel sets (15, 16) for the fifth and sixth gears are arranged in the first component transmission (1), and gearwheel sets (20, 21, 22, 23) for the first to fourth gears are arranged in the second component transmission.

8. Variable-speed gearwheel transmission according to Claim 7,
**characterized in that**
a gearwheel set (19) for the reverse gear is arranged in the first component transmission (1) by virtue of a fixed wheel and a loose wheel being connected via an intermediate wheel, wherein the intermediate wheel is mounted by means of an axle.

9. Variable-speed gearwheel transmission according to one of Claims 5 to 8,
**characterized in that**
the geared connection is arranged at the opposite end of the input shaft from the clutch.

10. Variable-speed gearwheel transmission according to Claim 2,
**characterized in that**
the first component transmission comprises no gearwheel sets for even-numbered forward gears, and the second component transmission comprises no gearwheel sets for odd-numbered forward gears.

11. Variable-speed gearwheel transmission according to Claim 2,
**characterized in that**
the first component transmission (1) comprises no gearwheel sets (15, 20, 22) for odd-numbered forward gears and the second component transmission (2) comprises no gearwheel sets (16, 21, 23) for even-numbered forward gears.

12. Variable-speed gearwheel transmission according to Claim 11,
**characterized in that**
gearwheel sets (16, 21, 23) for the second, fourth and sixth gears are arranged on the first component transmission, and gearwheel sets (15, 20, 22) for the first, third and fifth gears are arranged on the second component transmission.

13. Variable-speed gearwheel transmission according to Claim 10, 11 or 12,
**characterized in that**
a gearwheel set (17) for the reverse gear is arranged in the second component transmission (2) by virtue of a fixed wheel and a loose wheel being connected via an intermediate wheel, wherein the intermediate wheel is mounted by means of an axle.

14. Variable-speed gearwheel transmission according to one of the preceding claims, **characterized in that** a pump shaft (27) fixedly connected to the drive input shaft (6) is arranged coaxially within an input shaft (3) formed as a hollow shaft.

15. Use of the variable-speed gearwheel transmission according to one of Claims 6 to 9 as a manual shift transmission in a motor vehicle.

16. Use of the variable-speed gearwheel transmission according to one of Claims 6 to 9 as an automatic shift transmission in a motor vehicle.

17. Use of the variable-speed gearwheel transmission according to one of Claims 1, 11 to 13 as a powershift transmission in a motor vehicle.

18. Use of the variable-speed gearwheel transmission according to one of Claims 1 to 14 as a longitudinally installed transmission in a motor vehicle.

19. Use of the variable-speed gearwheel transmission according to one of Claims 1 to 14 as a transversely installed transmission in a motor vehicle.

## Revendications

1. Boîte de vitesses compacte, en particulier pour véhicules automobiles, comprenant un arbre d'entrée unique (3) et deux arbres de sortie (4, 9), qui sont tous deux en liaison avec un arbre de prise de force (13),
une première transmission partielle (1) étant formée par la liaison de l'arbre d'entrée (3) avec le premier arbre de sortie (4) par au moins un jeu de pignons (16), et un arbre d'entraînement (6) pouvant être connecté au moyen d'un embrayage (5) à l'arbre d'entrée (3), **caractérisée en ce qu'**une deuxième transmission partielle (2) est formée par la liaison d'un arbre intermédiaire (8) avec le deuxième arbre de sortie (9) par au moins un autre jeu de pignons (20, 22), l'arbre intermédiaire (8) étant en liaison (10) avec l'arbre d'entrée (3) par transmission de telle sorte qu'un mouvement de rotation de l'arbre d'entrée (3) et de l'arbre intermédiaire (8) soit constamment transmis entre l'arbre d'entrée (3) et l'arbre intermédiaire (8), et la liaison par transmission de l'arbre intermédiaire (8) à l'arbre d'entrée (3) a lieu au moyen de pignons sur les deux arbres et au moyen d'un pignon intermédiaire (10).

2. Boîte de vitesses compacte, en particulier pour véhicules automobiles, comprenant un premier arbre d'entrée (3) et un deuxième arbre d'entrée (26) disposé coaxialement par rapport au premier arbre d'entrée (3), et deux arbres de sortie (4, 9) qui sont tous deux en liaison avec un arbre de prise de force (13),
une première transmission partielle (1) étant formée par la liaison du premier arbre d'entrée (3) avec le premier arbre de sortie (4) par au moins un jeu de pignons (16), et un arbre d'entraînement (6) pouvant être relié au moyen d'un premier embrayage (5') au premier arbre d'entrée (3) et au moyen d'un deuxième embrayage (5") au deuxième arbre d'entrée (26), **caractérisée en ce qu'**une deuxième transmission partielle (2) est formée par la liaison d'un arbre intermédiaire (8) avec le deuxième arbre de sortie (9) par au moins un autre jeu de pignons (20, 22), l'arbre intermédiaire (8) étant en liaison (10) avec le deuxième arbre d'entrée (26) par transmission de telle sorte qu'un mouvement de rotation du deuxième arbre d'entrée (26) et de l'arbre intermédiaire (8) soit constamment transmis entre le deuxième arbre d'entrée (26) et l'arbre intermédiaire (8), et la liaison par transmission de l'arbre intermédiaire (8) au deuxième arbre d'entrée (26) a lieu au moyen de pignons sur les deux arbres et au moyen d'un pignon intermédiaire (10) .

3. Boîte de vitesses compacte selon la revendication 1 ou 2,
**caractérisée en ce que**
pour la liaison entre les arbres de sortie (4, 9) et l'arbre de prise de force (13), on dispose à chaque fois un pignon de prise de force (11, 12) sur chaque arbre de sortie (4, 9), les pignons de prise de force (11, 12) étant disposés dans le plan de la liaison par transmission (10).

4. Boîte de vitesses compacte selon l'une quelconque des revendications 1 à 3,
**caractérisée en ce que**
la deuxième transmission partielle (2) - vue dans la direction de l'arbre intermédiaire (8) - présente, devant et derrière la liaison (10) par transmission, des jeux de pignons (20, 21, 22, 23, 15).

5. Boîte de vitesses compacte selon l'une quelconque des revendications 1 à 4,
**caractérisée en ce que**
le nombre des jeux de pignons de la deuxième transmission partielle (2) est au moins égal au nombre des jeux de pignons de la première transmission partielle (1).

6. Boîte de vitesses compacte selon l'une quelconque des revendications 1, 3 à 5,
**caractérisée en ce que**
dans la première et la deuxième transmission partielle (1, 2) sont disposés les uns à côté des autres des jeux de pignons (15-16, 20-21, 22-23), leurs pignons fous étant commutés par une unité de synchronisation commune (18, 24, 45), les jeux de pignons correspondant à chaque fois à des rapports de marche avant successifs.

7. Boîte de vitesses compacte selon l'une quelconque des revendications 1, 3 à 6,
**caractérisée en ce que**
sur la première transmission partielle (1) sont disposés des jeux de pignons (15, 16) pour le cinquième et le sixième rapport, et sur la deuxième transmission partielle sont disposés des jeux de pignons (20, 21, 22, 23) pour les premier à quatrième rapports.

8. Boîte de vitesses compacte selon la revendication 7,
**caractérisée en ce**
**qu'**un jeu de pignons (19) pour le rapport de marche arrière est disposé dans la première transmission partielle (1), un pignon fixe et un pignon fou étant reliés au moyen d'un pignon intermédiaire, le pignon intermédiaire étant supporté au moyen d'un axe.

9. Boîte de vitesses compacte selon l'une quelconque des revendications 5 à 8,
**caractérisée en ce que**
la liaison par transmission est disposée sur l'extrémité de l'arbre d'entrée opposée à l'embrayage.

10. Boîte de vitesses compacte selon la revendication 2,
**caractérisée en ce que**
la première transmission partielle ne comprend aucun jeu de pignons pour des rapports de marche avant pairs, et la deuxième transmission partielle ne comprend aucun jeu de pignons pour des rapports de marche avant impairs.

11. Boîte de vitesses compacte selon la revendication 2,
**caractérisée en ce que**
la première transmission partielle (1) ne comprend aucun jeu de pignons (15, 20, 22) pour des rapports de marche avant impairs et la deuxième transmission partielle (2) ne comprend aucun jeu de pignons (16, 21, 23) pour des rapports de marche avant pairs.

12. Boîte de vitesses compacte selon la revendication 11,
**caractérisée en ce que**
sur la première transmission partielle sont disposés des jeux de pignons (16, 21, 23) pour le deuxième, quatrième et sixième rapport, et sur la deuxième transmission partielle sont disposés des jeux de pignons (15, 20, 22) pour le premier, troisième et cinquième rapport.

13. Boîte de vitesses compacte selon la revendication 10, 11 ou 12,
**caractérisée en ce**
**qu'**un jeu de pignons (17) est disposé dans la deuxième transmission partielle (2) pour le rapport de marche arrière, un pignon fixe et un pignon fou étant reliés au moyen d'un pignon intermédiaire, le pignon intermédiaire étant supporté au moyen d'un axe.

14. Boîte de vitesses compacte selon l'une quelconque des revendications précédentes,
**caractérisée en ce**
**qu'**un arbre de pompe (27) relié fixement à l'arbre d'entraînement (6) est disposé coaxialement à l'intérieur d'un arbre d'entrée (3) réalisé sous forme d'arbre creux.

15. Utilisation de la boîte de vitesses compacte selon l'une quelconque des revendications 6 à 9, en tant que boîte de vitesses manuelle dans un véhicule automobile.

16. Utilisation de la boîte de vitesses compacte selon l'une quelconque des revendications 6 à 9 en tant que boîte de vitesses automatisée dans un véhicule automobile.

17. Utilisation de la boîte de vitesses compacte selon l'une quelconque des revendications 1, 11 à 13 en tant que transmission à changement de rapports sous charge dans un véhicule automobile.

18. Utilisation de la boîte de vitesses compacte selon l'une quelconque des revendications 1 à 14 en tant que transmission installée en longueur dans un véhicule automobile.

19. Utilisation de la boîte de vitesses compacte selon l'une quelconque des revendications 1 à 14 en tant que transmission montée transversalement dans un véhicule automobile.
